# EUROPEAN PATENT APPLICATION

(11) **EP 4 815 210 A1**
(43) Date of publication of application: **30.09.2026**
(21) Application number: 26165459.4
(22) Date of filing: 17.03.2026
(51) Int. Cl.: H01R 9/05, B60R 16/02, H02G 15/08, H02G 15/115, H01R 4/02, H01R 4/70

(54) **INLINE POWER CONNECTOR FOR A POWER CONNECTOR SYSTEM**

(30) Priority: 20.03.2025 US 202563774958 P; 05.12.2025 US 202563931750 P; 11.03.2026 US 202619563548
(71) Applicant: TE Connectivity Solutions GmbH, 8200 Schaffhausen (CH)
(72) Inventor: VENKATESAN, Ram Kishore, Winston Salem, 27101-2166 (US); PETERSON, Kevin John, Winston Salem, 27101-2166 (US); SHOEMAKER, Joshua T, Winston Salem, 27101-2166 (US); HEMNANI, Dinesh Loku, Winston Salem, 27101-2166 (US); BROWN, Michael Dale, Winston Salem, 27101-2166 (US)
(74) Representative: Ashton, Gareth Mark

(57) **Abstract**

An inline power connector (200) for connecting a first power cable (110) and a second power cable of a power cable harness (102) is provided. The inline power connector includes a conductor termination (210) for electrically connecting a first cable conductor (110) of the first power cable and a second cable conductor of the second power cable. The inline power connector includes a power connector insulator (220) surrounding the conductor termination to isolate the conductor termination. The inline power connector includes a power connector shield (250) surrounding the power connector insulator. The power connector shield includes a first shield end (260) and a second shield end (262). The first shield end is configured to be coupled to a first cable shield (118) of the first power cable. The second shield end is configured to be coupled to a second cable shield (128) of the second power cable. The inline power connector includes a power connector housing (152) has a housing cavity (282) that receives the power connector shield. The power connector insulator, and the conductor termination. The power connector housing holds a first seal (290) at a first housing end (286) is configured to be sealed to the first power cable and a second seal (295) at a second housing end (288) is configured to be sealed to the second power cable.

## Description

This application claims priority to US Application No. 19/563548, filed 11-March-2026, US Application No. 63/931,750, filed 05-December-2025, and US Application No. 63/774,958 filed 20-March-2025, subject matter of which is herein incorporated by reference in its entirety.

The subject matter herein relates generally to power connector systems.

Power connectors are used to transmit power between various components in a system. Power may be transmitted by the power connectors between a battery and a load or between a charging inlet and a battery. For example, power connectors within a vehicle, such as an electric vehicle or a hybrid electric vehicle, may be used to supply power from the battery to another component within the vehicle or may be used to recharge the battery through a charging inlet. A typical electric vehicle includes numerous devices or subsystems that are powered by the battery. It is difficult to route the cable harnesses between the battery and each of the devices and subsystems. Additionally, the numerous cable harnesses add weight and cost to the system.

A need remains for a power connector system having a reduced weight and cost that may be assembled and operated in a reliable manner.

In an embodiment, an inline power connector for connecting a first power cable and a second power cable of a power cable harness is provided. The inline power connector includes a conductor termination for electrically connecting a first cable conductor of the first power cable and a second cable conductor of the second power cable. The inline power connector includes a power connector insulator surrounding the conductor termination to isolate the conductor termination. The inline power connector optionally includes a power connector shield surrounding the power connector insulator. The power connector shield includes a first shield end and a second shield end. The first shield end is configured to be coupled to a first cable shield of the first power cable. The second shield end is configured to be coupled to a second cable shield of the second power cable. The inline power connector includes a power connector housing having a housing cavity that receives the power connector shield (if present), the power connector insulator, and the conductor termination. The power connector housing holds a first seal at a first housing end that is configured to be sealed to the first power cable and a second seal at a second housing end that is configured to be sealed to the second power cable.

A power cable harness for connecting electrical components of a vehicle may comprise a primary line power cable connected to an end line power cable by the inline power connector. The inline power connector provides a sealed and shielded connection between the primary line power cable and the end line power cable.

Embodiments of the invention will be described by way of example with reference to the accompanying Figures of which:
Figure 1 illustrates an electric vehicle having a power connector system in accordance with an exemplary embodiment.
Figure 2 illustrates the power cable harness of the power connector system in accordance with an exemplary embodiment.
Figure 3 illustrates a portion of the power cable harness shown in Figure 2 in accordance with an exemplary embodiment.
Figure 4 is an exploded view of the power cable harness in accordance with an exemplary embodiment.
Figure 5 is a partially assembled view of the power cable harness in accordance with an exemplary embodiment.
Figure 6 is a partially assembled view of the power cable harness in accordance with an exemplary embodiment.
Figure 7 is an assembled view of the power cable harness in accordance with an exemplary embodiment.
Figure 8 is a cross-sectional view of the inline power connector in accordance with an exemplary embodiment.

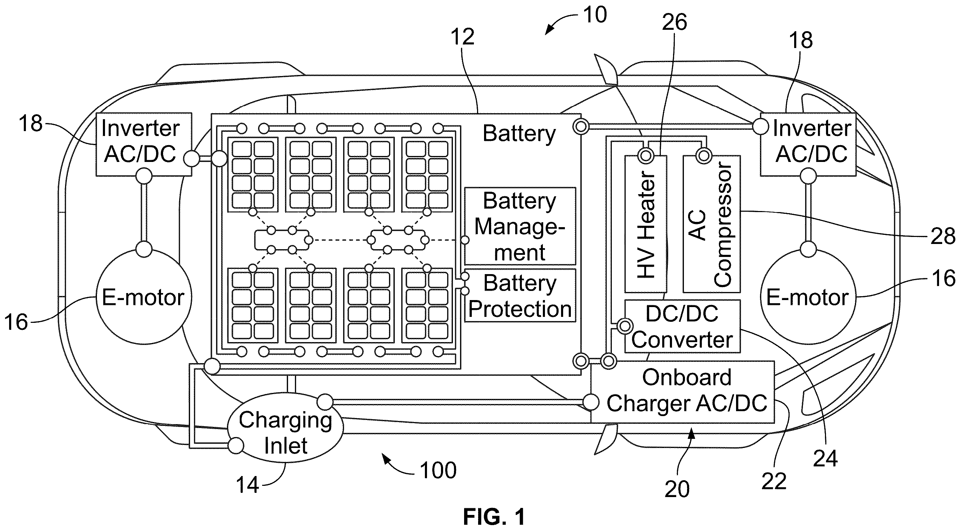

Figure 1 illustrates an electric vehicle having a power connector system 100 in accordance with an exemplary embodiment. The power connector system 100 is used for powering various components and subsystems of the electric vehicle 10. In an exemplary embodiment, the power connector system 100 is used for transferring power to or from a battery 12 of the electric vehicle 10. For example, the power connector system 100 is used to electrically connect the battery 12 to a charging inlet 14 for recharging the battery 12. The power connector system 100 uses one or more power cable harnesses 102 to connect the battery 12 to the various components or subsystems of the electric vehicle 10. The power connector system 100 may be a high power connector system, such as capable of handling high voltage and/or amperage.

The power connector system 100 is used to electrically connect the battery 12 to an electric motor 16, such as through an alternating current/direct current (AC/DC) inverter 18. The electric vehicle 10 may include multiple electric motors 16 and AC/DC inverters 18. The power connector system 100 is used to electrically connect the battery 12 to other vehicle subsystems 20, such as an onboard AC/DC charger 22, a DC/DC converter 24, a heater 26, an AC compressor 28, and the like. The power connector system 100 may be used to electrically connect the battery 12 to other vehicle subsystems and/or accessories.

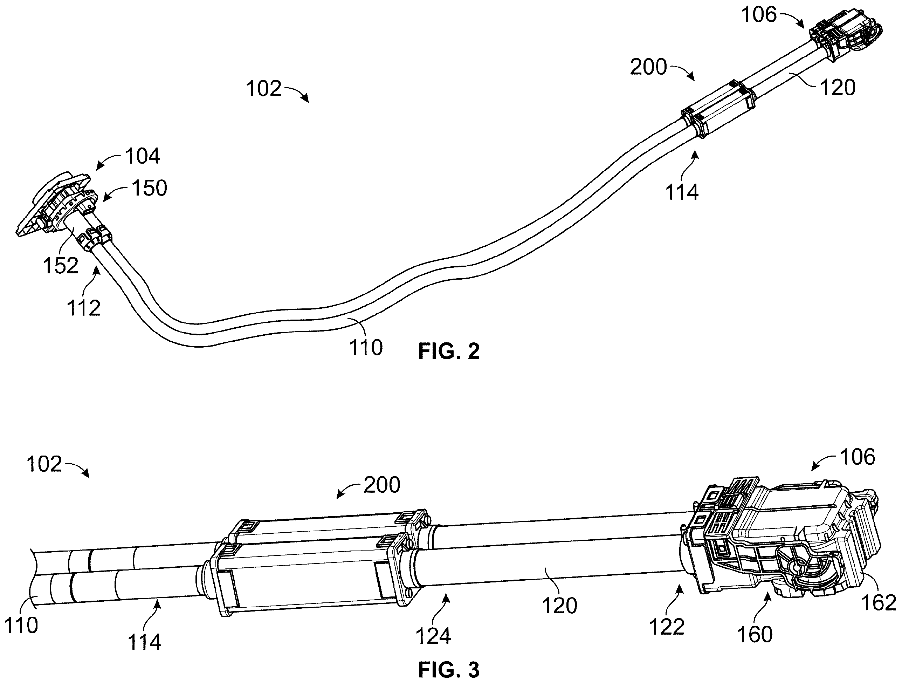

Figure 2 illustrates the power cable harness 102 of the power connector system 100 in accordance with an exemplary embodiment. Figure 3 illustrates a portion of the power cable harness 102 shown in Figure 2. The power cable harness 102 includes multiple terminations 104, 106 for connection to the various components (for example, the charging inlet 14 and the battery 12 shown in Figure 1). For example, the termination 104 may be coupled to, or define at least a portion of, the charging inlet 14.

In an exemplary embodiment, the power cable harness 102 includes a primary line power cable 110 and an end line power cable 120. The power cable harness 102 includes an inline power connector 200 between the primary line power cable 110 and the end line power cable 120. The description herein is with reference to a single power transmission line (for example, positive transmission line). However, it is realized that the power connector system 100 may include dual power transmission lines (for example, positive transmission line and negative transmission line). For example, a harness assembly may include multiple power cable harnesses 102 in parallel, such as a positive and negative cable harness. The power cable harnesses 102 may be tied together, such as using a sleeve or outer jacket to hold the cables in parallel for easier routing within the electric vehicle 10.

In an exemplary embodiment, the primary line power cable 110 is a rigid power cable configured to retain its shape and the end line power cable 120 is a flexible power cable that is flexible for mating with the corresponding component. The flexible power cable makes assembly/mating of the power cable harness 102 within the vehicle easier. The rigid power cable makes assembly within the vehicle easier. For example, the rigid power cable may be shaped, such as including bends in predetermined positions, that correspond with the desired routing layout within the vehicle. The shape of the rigid power cable may allow for ease in mounting within the vehicle, such as at predetermined mounting locations along the chassis are next to structures of the vehicle. In an exemplary embodiment, the primary line power cable 110 and/or the end line power cable 120 are made from a lighter weight material or a lower cost material compared to conventional power cables for charging inlet assemblies. For example, the primary line power cable 110 and/or the end line power cable 120 may be made from aluminum instead of copper, as aluminum is lighter weight and less expensive per length of cable compared to copper.

In an exemplary embodiment, the primary line power cable 110 and the end line power cable 120 are shielded cables. For example, the primary line power cable 110 and the end line power cable 120 include cable shields that extend the lengths of the primary line power cable 110 and the end line power cable 120. The shielded power cables provide cable shielding along the length of the power cable harness 102 between the electrical components and may be electrically commoned or terminated to shields of the electrical components to provide shielding within the power connector system 100. The inline power connector 200 is electrically connected to the cable shields of the primary line power cable 110 and the end line power cable 120. The inline power connector 200 continues the shield structure along the length of the power cable harness 102 between the primary line power cable 110 and the end line power cable 120. In an exemplary embodiment, the inline power connector 200 is sealed to the primary line power cable 110 and the end line power cable 120 to prevent debris and water from fouling the termination between the primary line power cable 110 and the end line power cable 120. In alternative embodiments, the individual power cables 110, 120 may be unshielded cables. In such embodiments, the system may include a bundle cable shield that extends along the lengths of the power cables 110, 120 and the inline power connector 200 may be electrically connected to the bundle cable shield rather than individual cable shields of the individual power cables 110, 120.

The primary line power cable 110 is configured to be coupled to the first electrical component (for example, the charging inlet 14) by a power connector 150. The primary line power cable 110 is configured to be coupled to the end line power cable 120 by the inline power connector 200. In an exemplary embodiment, the primary line power cable 110 is a high voltage shielded cable. In various embodiments, the primary line power cable 110 may be a 200mm² shielded cable. However, the primary line power cable 110 may be a different gauge wire in alternative embodiments. The primary line power cable 110 extends between a first cable end 112 and a second cable end 114. The power connector 150 is provided at the first cable end 112 and the inline power connector 200 is provided at the second cable end 114. The power connector 150 may be crimped or welded to the first cable end 112. The inline power connector 200 may be crimped or welded to the second cable end 114.

The power connector 150 is configured to be coupled to the charging inlet 14. In an exemplary embodiment, the power connector 150 is a plug connector configured to be removably coupled to the charging inlet 14. In alternative embodiments, the power connector 150 is part of the charging inlet 14, such as having the primary line power cable 110 terminated directly to the charging terminal (for example, charging pin) of the charging inlet 14. The power connector 150 includes a connector housing 152. The primary line power cable 110 extends from the connector housing 152. The primary line power cable 110 is configured to be coupled to a power terminal (not shown) in the connector housing 152. For example, the primary line power cable 110 may be coupled to the charging pin of the charging inlet 14.

The end line power cable 120 is configured to be coupled to the second electrical component (for example, the battery 12) by a power connector 160. The example, the power connector 160 may define the termination 106 configured to be terminated to the battery 12. The end line power cable 120 is configured to be coupled to the primary line power cable 110 by the inline power connector 200. In an exemplary embodiment, the end line power cable 120 is a high voltage shielded cable. In various embodiments, the end line power cable 120 may be a 120mm² shielded cable. However, the end line power cable 120 may be a different gauge wire in alternative embodiments. The end line power cable 120 extends between a first cable end 122 and a second cable end 124. The power connector 160 is provided at the first cable end 122 and the inline power connector 200 is provided at the second cable end 124. The power connector 160 may be crimped or welded to the first cable end 122. The inline power connector 200 may be crimped or welded to the second cable end 124.

The power connector 160 is configured to be coupled to the charging inlet 14. In an exemplary embodiment, the power connector 160 is a plug connector configured to be removably coupled to a header connector or socket connector of the battery 12. The power connector 160 includes a connector housing 162. The end line power cable 120 extends from the connector housing 162. The end line power cable 120 is configured to be coupled to a power terminal (not shown) in the connector housing 162. For example, the power terminal may be a blade terminal, a socket terminal, or other type of terminal.

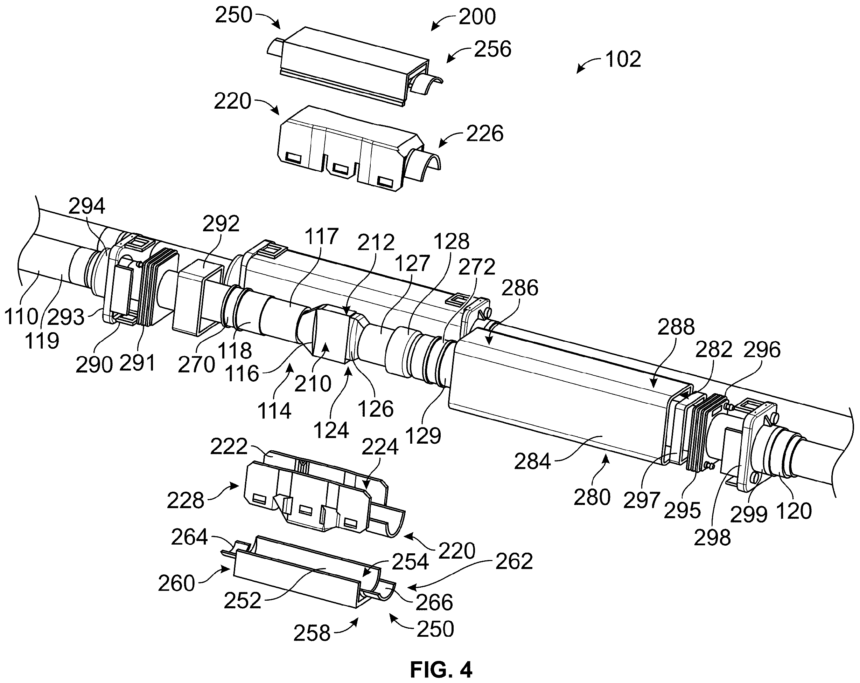

Figure 4 is an exploded view of the power cable harness 102 in accordance with an exemplary embodiment. The power cable harness 102 includes the inline power connector 200 between the primary line power cable 110 and the end line power cable 120. The inline power connector 200 is configured to be coupled to the end 114 of the primary line power cable 110 and is configured to be coupled to the end 124 of the end line power cable 120. The inline power connector 200 is a shielded connector that commons the cable shields of the primary line power cable 110 and the end line power cable 120. The inline power connector 200 is a sealed connector configured to be sealed to the primary line power cable 110 and the end line power cable 120.

The primary line power cable 110 includes a first cable conductor 116, a first cable insulator 117 surrounding the first cable conductor 116, and a first cable shield 118 surrounding the first cable insulator 117. The primary line power cable 110 may include a first cable jacket 119 surrounding the first cable shield 118. The first cable shield 118 provides shielding for the first cable conductor 116 along the length of the primary line power cable 110. In an exemplary embodiment, the first cable conductor 116 is a solid core conductor. For example, the first cable conductor 116 may be an extruded aluminum core conductor. In the illustrated embodiment, the first cable conductor 116 has a circular cross-section. However, the first cable conductor 116 may have other shapes, such as being rectangular or oval. The first cable conductor 116 is rigid and configured to retain a shape.

The end line power cable 120 includes a first cable conductor 126, a first cable insulator 127 surrounding the first cable conductor 126, and a first cable shield 128 surrounding the first cable insulator 127. The end line power cable 120 may include a first cable jacket 129 surrounding the first cable shield 128. The first cable shield 128 provides shielding for the first cable conductor 126 along the length of the end line power cable 120. In an exemplary embodiment, the first cable conductor 126 is a stranded core conductor. For example, the first cable conductor 126 may include a bundle of aluminum or copper wires or strands forming the core. In the illustrated embodiment, the first cable conductor 126 has a circular cross-section. However, the first cable conductor 126 may have other shapes, such as being rectangular or oval. The first cable conductor 126 is flexible and may be manipulated or moved relative to the inline power connector 200 and the primary line power cable 110, such as for mating with the corresponding electrical component.

In an exemplary embodiment, the inline power connector 200 includes a conductor termination 210, a power connector insulator 220 surrounding the conductor termination 210, a power connector shield 250 surrounding the power connector insulator 220, and a power connector housing 280 having a housing cavity 282 that receives the power connector shield 250, the power connector insulator 220, and the conductor termination 210.

The conductor termination 210 is configured to electrically connect the first cable conductor 116 of the first power cable 110 and the second cable conductor 126 of the second power cable 120. In an exemplary embodiment, the conductor termination 210 includes a weld joint 212 connecting the first cable conductor 116 and the second cable conductor 126. In an exemplary embodiment, the end of the first cable conductor 116 is configured to be directly welded to the end of the second cable conductor 126 at the conductor termination 210. In other embodiments, a separate weld plate may be provided at the conductor termination 210 that is welded to the first cable conductor 116 and the second cable conductor 126.

The power connector insulator 220 surrounds the conductor termination 210 to isolate the conductor termination 210 from the power connector shield 250. For example, the power connector insulator 220 is manufactured from a dielectric material, such as a plastic material that is electrically insulating to isolate the conductor termination 210 from the power connector shield 250. The power connector insulator 220 is sized and shaped to receive the conductor termination 210 and the ends of the first and second cable conductors 116, 126. In an exemplary embodiment, the power connector insulator 220 includes insulator walls 222 forming an insulator cavity 224. The insulator cavity 224 receives the conductor termination 210 and the ends of the first and second cable conductor 116, 126. The insulator walls 222 may include locating features or surfaces that interface with the conductor termination 210 and/or the first and second cable conductors 116, 126 to locate the conductor termination 210 in the insulator cavity 224.

In an exemplary embodiment, the power connector insulator 220 is a multipiece insulator. For example, the power connector insulator 220 includes an upper insulator element 226 and a lower insulator element 228 that may be coupled together to surround the conductor termination 210. The upper and lower insulator elements 226, 228 may be molded pieces. In various embodiments, the upper and lower insulator elements 226, 228 are identical to each other and inverted 180° relative to each other.

In alternative embodiments, rather than being preformed insulator elements, the power connector insulator 220 may be an insulating layer covering an interior surface of the power connector shield 250 or may be an insulating layer covering the conductor termination 210 and the ends of the cable connectors 116, 126. In other various embodiments, the power connector insulator 220 may be potting material or epoxy filling an interior space of the power connector shield 250 to isolate the power connector shield 250 from the conductor termination 210.

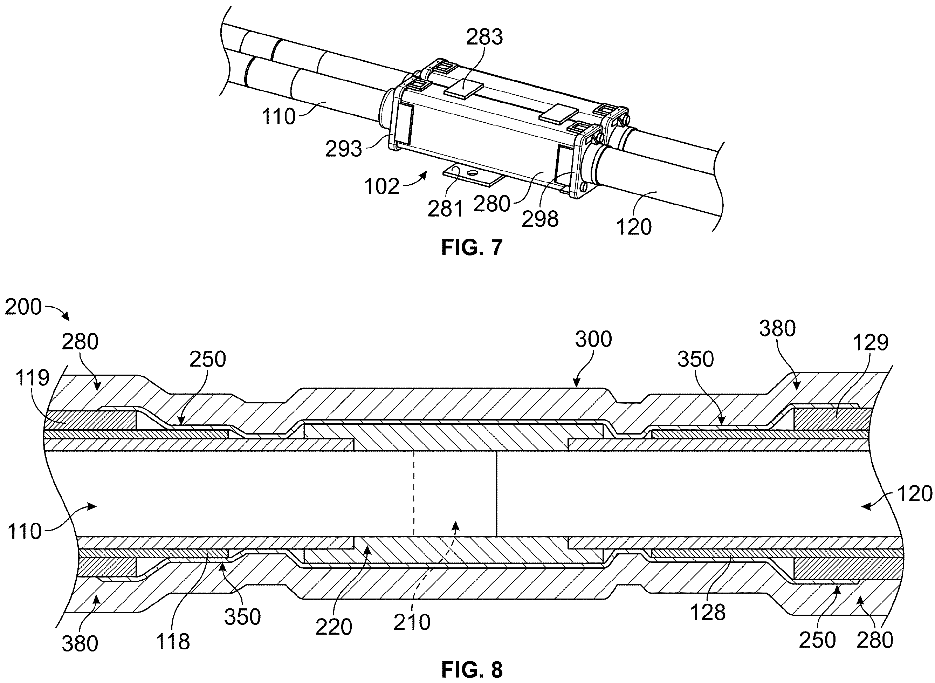

The power connector shield 250 surrounds the power connector insulator 220. The power connector shield 250 is manufactured from a conductive material, such as aluminum, copper, stainless steel, or other metal material. The power connector shield 250 may be stamped and formed part. In other various embodiments, the power connector shield 250 may be a die cast part. The power connector shield 250 may be defined by a layer of a heat shrink element (for example, see the heat shrink element 300 shown in Figure 8). The power connector shield 250 includes shield walls 252 forming a shield cavity 254. The shield cavity 254 receives the power connector insulator 220 as well as the conductor termination 210 and the ends of the cable connectors 116, 126. The shield walls 252 may include locating features or surfaces that interface with the power connector insulator 220 to locate the power connector insulator 220 in the shield cavity 254.

In an exemplary embodiment, the power connector shield 250 is a multipiece shield. For example, the power connector shield 250 includes an upper shield element 256 and a lower shield element 258 that may be coupled together to surround the power connector insulator 220. The upper and lower shield elements 256, 258 may be stamped and formed pieces. In alternative embodiments, the upper and lower shield elements 256, 258 may be die cast pieces. In various embodiments, the upper and lower shield elements 256, 258 are identical to each other and inverted 180° relative to each other.

The power connector shield 250 extends between a first shield end 260 and a second shield end 262. The first shield end 260 is configured to be coupled to the first cable shield 118 of the first power cable 110. The second shield end 262 is configured to be coupled to the second cable shield 128 of the second power cable 120. In an exemplary embodiment, the power connector shield 250 includes first crimp elements 264 at the first shield end 260, such as extending from the upper and lower shield elements 256, 258. The first crimp elements 264 are configured to be crimped to the first cable shield 118 of the first power cable 110. The power connector shield 250 includes second crimp elements 266 at the second shield end 262, such as extending from the upper and lower shield elements 256, 258. The second crimp elements 266 are configured to be crimped to the second cable shield 128 of the second power cable 120.

In an exemplary embodiment, the inline power connector 200 includes a first ferrule 270 surrounding the first power cable 110 and a second ferrule 272 surrounding the second power cable 120. The first ferrule 270 is configured to receive the first cable shield 118 between the first ferrule 270 and the first crimp element 264. The first ferrule 270 is configured to be crimped to mechanically and electrically connect the first shield end 260 of the power connector shield 250 to the first cable shield 118. The second ferrule 272 is configured to receive the second cable shield 128 between the second ferrule 272 and the second crimp element 266. The second ferrule 272 is configured to be crimped to mechanically and electrically connect the second shield end 262 of the power connector shield 250 to the second cable shield 128.

The power connector housing 280 includes housing walls 284 forming the housing cavity 282. In the illustrated embodiment, the housing walls 284 form a rectangular housing that receives the components of the inline power connector 200 therein. The power connector housing 280 may have other shapes in alternative embodiments, such as a circular shape. In an exemplary embodiment, the power connector housing 280 is manufactured from a dielectric material. For example, the power connector housing 280 may be a molded plastic part. The power connector housing 280 may be manufactured from other materials in alternative embodiments. For example, the power connector housing 280 may be manufactured from a metal material, such as being a cast part. Having the power connector housing 280 being conductive could eliminate the need for the power connector shield 250. The power connector housing 280 extends between a first housing end 286 and a second housing end 288.

In an exemplary embodiment, the power connector housing 280 is configured to hold a first seal 290 at the first housing end 286. The first seal 290 is configured to be sealed to the first power cable 110. The first seal 290 is configured to be sealed to the power connector housing 280. For example, the first seal 290 includes seal ribs 291 at an outer perimeter of the first seal 290 configured to be sealed to an interior surface of the power connector housing 280. In an exemplary embodiment, a first seal stop 292 is used to position the first seal 290 in the power connector housing 280. The first seal stop 292 may engage other components within the power connector housing 280 such as the power connector shield 250 to locate the first seal stop 292 in the housing cavity 282. In an exemplary embodiment, a seal cover 293 is configured to be coupled to the first housing end 286 of the power connector housing 280 to retain the first seal 290 in the housing cavity 282. The seal cover 293 may be latchably coupled to the power connector housing 280. In an exemplary embodiment, the seal cover 293 includes a cable strain relief 294 surrounding the first power cable 110 to provide strain relief for the first power cable 110.

In an exemplary embodiment, the power connector housing 280 is configured to hold a second seal 295 at the second housing end 288. The second seal 295 is configured to be sealed to the second power cable 110. The second seal 295 is configured to be sealed to the power connector housing 280. For example, the second seal 295 includes seal ribs 296 at an outer perimeter of the second seal 295 configured to be sealed to an interior surface of the power connector housing 280. In an exemplary embodiment, a second seal stop 297 is used to position the second seal 295 in the power connector housing 280. The second seal stop 297 may engage other components within the power connector housing 280 such as the power connector shield 250 to locate the second seal stop 297 in the housing cavity 282. In an exemplary embodiment, a seal cover 298 is configured to be coupled to the second housing end 288 of the power connector housing 280 to retain the second seal 295 in the housing cavity 282. The seal cover 298 may be latchably coupled to the power connector housing 280. In an exemplary embodiment, the seal cover 298 includes a cable strain relief 299 surrounding the second power cable 110 to provide strain relief for the second power cable 110.

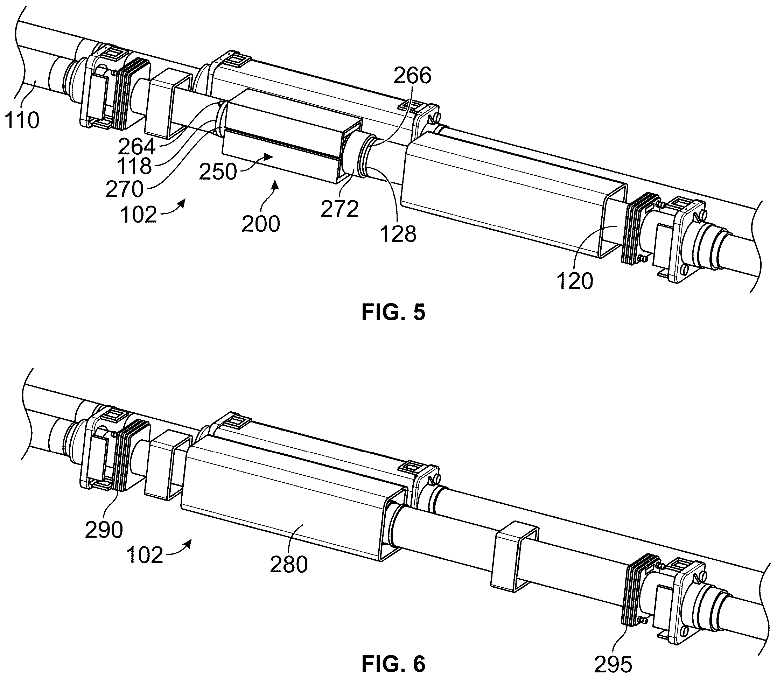

Figure 5 is a partially assembled view of the power cable harness 102 in accordance with an exemplary embodiment. The power cable harness 102 includes the inline power connector 200 between the primary line power cable 110 and the end line power cable 120. The inline power connector 200 is a shielded connector that commons the cable shields 118, 128 of the primary line power cable 110 and the end line power cable 120. The inline power connector 200 is a sealed connector configured to be sealed to the primary line power cable 110 and the end line power cable 120.

After the ends of the cable conductors 116, 126 are terminated at the conductor termination 210, the power connector insulator 220 and the power connector shield 250 are assembled. The power connector insulator 220 electrically isolates the conductor termination 210 from the power connector shield 250. The power connector shield 250 is terminated to the cable shields 118, 128 to electrically common the cable shields 118, 128 and provide a continuous shield structure along the length of the power cable harness 102. In an exemplary embodiment, the power connector shield 250 is crimped to the ends of the cable shields 118, 128. For example, the first and second ferrules 270, 272 may be crimped to the first and second cable shields 118, 128 and first and second crimp elements 264, 266, respectively. The crimped connections mechanically and electrically connect the power connector shield 250 with the first and second cable shields 118, 128.

Figure 6 is a partially assembled view of the power cable harness 102 in accordance with an exemplary embodiment. During assembly, after the power connector shield 250 is terminated to the first and second cable shields 118, 128, the power connector housing 280 may be positioned over the power connector shield 250 and sealed using the first and second seals 290, 295. The power connector housing 280 surrounds the power connector shield 250 and protects the internal components of the power cable harness 102. The power connector housing 280 may provide strain relief for the conductor termination 210 and the crimped terminations of the power connector shield 250.

Figure 7 is an assembled view of the power cable harness 102 in accordance with an exemplary embodiment. During assembly, after the power connector shield 250 is terminated to the first and second cable shields 118, 128 and the power connector housing 280 is positioned over the power connector shield 250, the first and second seals 290, 295 may be loaded into the ends of the power connector housing 280 and the seal covers 293, 298 coupled to the ends of the power connector housing 280. A sealed and shielded connector is thus provided inline with the primary line power cable 110 and the end line power cable 120.

In an exemplary embodiment, the power connector housing 280 includes a mounting bracket 281 for mounting the inline power connector 200 to a structure, such as a chassis or other component within the vehicle. Mounting the power connector housing 280 within the vehicle secures the end of the rigid primary line power cable 110 thus fixing the primary line power cable 110 within the vehicle. The flexible end line power cable 120 is able to move relative to the fixed mounting point within the vehicle, such as for mating with the corresponding electrical component.

In an exemplary embodiment, the power connector housing 280 includes an attachment feature 283 for attaching the power connector housing 280 to a power connector housing 280 of another inline power connector 200 to gang the pair of inline power connectors 200 together. More than two of the inline power connectors 200 may be ganged together within the power cable harness 102 in other embodiments. Optionally, the cable shields of the ganged power cables 110, 120 may be ganged cable shields. For example, the first power cables 110 may share a common cable shield and the second power cables 120 may share a common cable shield. The inline power connectors 200 electrically connect the shared cable shield of the first power cables 110 with the shared cable shield of the second power cables 120.

Figure 8 is a cross-sectional view of the inline power connector 200 in accordance with an exemplary embodiment. The in line power connector 200 electrically connects the primary line power cable 110 and the end line power cable 120. The inline power connector 200 electrically connects the first cable shield 118 of the first power cable 110 with the second cable shield 128 of the second power cable 120. The inline power connector 200 includes the conductor termination 210, the power connector insulator 220 surrounding the conductor termination 210, the power connector shield 250 surrounding the power connector insulator 220, and the power connector housing 280 surrounding the power connector shield 250, the power connector insulator 220, and the conductor termination 210.

In an exemplary embodiment, the inline power connector 200 includes a heat shrink element 300. The heat shrink element 300 includes a conductive layer 350 and the insulating layer 380. The heat shrink element 300 may be applied to the primary line power cable 110 and the end line power cable 120 by application of heat to shrink the heat shrink element 300 around the ends of the primary line power cable 110 and the end line power cable 120. The conductive layer 350 is provided at an interior surface of the heat shrink element 300 and defines the power connector shield 250. The conductive layer 350 is configured to be electrically connected to the first cable shield 118 of the first power cable 110 and the second cable shield 128 of the second power cable 120. The conductive layer 350 may be a film or conductive ink at an inner surface of the heat shrink element 300. For example, when the heat shrink element 300 is heat shrink applied to the power cables 110, 120, the conductive layer 350 electrically connects to the cable shields 118, 128 to form the power connector shield 250 of the inline power connector 200. The insulating layer 380 surrounds the components of the inline power connector 200 and forms the power connector housing 280 that protect the components of the inline power connector 200. In an exemplary embodiment, the insulating layer 380 is heat shrink applied to the cable jacket 119, 129 of the first and second power cables 110, 120 to seal the ends of the inline power connector 200 to the ends of the first and second power cables 110, 120. In other various embodiments, the insulating layer 380 may be located at the interior of the heat shrink element 300 defining the power connector insulator 220 that electrically isolates the power connector shield 250 from the conductor termination 210. In other various embodiments, the heat shrink element 300 may include an additional insulating layer along the interior that defines the power connector insulator 220.

## Claims

1. An inline power connector (200) for connecting a first power cable (110) and a second power cable of a power cable harness (102), the inline power connector comprising:
a conductor termination (210) for electrically connecting a first cable conductor (116) of the first power cable and a second cable conductor of the second power cable;
a power connector insulator (220) surrounding the conductor termination to isolate the conductor termination;
a power connector shield (250) surrounding the power connector insulator, the power connector shield including a first shield end (260) and a second shield end (262), the first shield end configured to be coupled to a first cable shield (128) of the first power cable, the second shield end configured to be coupled to a second cable shield of the second power cable; and
a power connector housing (152) having a housing cavity (282) that receives the power connector shield, the power connector insulator, and the conductor termination, the power connector housing holding a first seal (290) at a first housing end (286) configured to be sealed to the first power cable and a second seal (295) at a second housing end (288) configured to be sealed to the second power cable.

2. The inline power connector (200) of claim 1, wherein the conductor termination (210) is configured to couple a solid core conductor of the first power cable (110) with a stranded core conductor of the second power cable.

3. The inline power connector (200) of claim 1 or 2, wherein the conductor termination (210) includes a weld joint (212) directly connecting the first and second cable conductors (116, 126).

4. The inline power connector (200) of any preceding claim, wherein the power connector insulator (220) isolates the conductor termination (210) from the power connector shield (250) and is configured isolate the first and second cable conductors (116, 126) from the power connector shield.

5. The inline power connector (200) of any preceding claim, wherein the power connector insulator (220) includes an upper insulator element (226) and a lower insulator element (228) coupled to the upper insulator element to surround the conductor termination (210).

6. The inline power connector (200) of any preceding claim, wherein the power connector shield (250) includes an upper shield element (256) and a lower shield element (258) coupled to the upper shield element to surround the power connector insulator (220), or wherein the power connector shield (350) is defined by a layer of a heat shrink element (300), the heat shrink element (300) comprising an insulating layer (380) defining the power connector housing.

7. The inline power connector (200) of any preceding claim, wherein the power connector shield (250) includes a first crimp barrel (264) at the first shield and configured to be crimped to the first cable shield (118) of the first power cable (110), the power connector shield including a second crimp barrel (266) at the second shield and configured to be crimped to the second cable shield of the second power cable.

8. The inline power connector (200) of claim 7, further comprising a first ferrule (270) configured to surround the end of the first power cable (110) and a second ferrule (272) configured to surround the end of the second power cable, the first ferrule configured to receive the first cable shield (128) between the first ferrule and the first crimp barrel (264), the first ferrule being crimped to mechanically and electrically connect the first shield end (260) of the power connector shield (250) to the first cable shield, the second ferrule configured to receive the second cable shield between the second ferrule and the second crimp barrel (266), the second ferrule being crimped to mechanically and electrically connect the second shield end (262) of the power connector shield to the second cable shield.

9. The inline power connector (200) of any preceding claim, wherein the power connector housing (152) includes a first seal cover (298) coupled to the first housing end (286) to retain the first seal (290) in the housing cavity (282), the power connector housing (162) including a second seal cover coupled to the second housing end (288) to retain the second seal (295) in the housing cavity, wherein the first seal cover (298) optionally includes a first cable strain relief (294) coupled to the first power cable (110) and the second seal cover optionally includes a second cable strain relief (299) coupled to the second power cable.

10. The inline power connector (200) of any preceding claim, wherein the power connector housing (152) includes a mounting bracket (281) for mounting the inline power connector to a structure.

11. The inline power connector (200) of any preceding claim, wherein the power connector housing (152) includes an attachment feature for attaching the power connector housing to a power connector housing of another inline power connector to gang the inline power connector with the other inline power connector.

12. A power cable harness (102) for connecting electrical components of a vehicle (10), the power cable harness comprising:
a primary line power cable (110) extending to a first cable end (112), the primary line power cable having a first cable conductor (116), a first cable insulator (117) surrounding the first cable conductor, and a first cable shield (118) surrounding the first cable insulator, the first cable conductor being a solid core conductor, the first cable conductor being rigid and configured to retain a shape, wherein an opposite end of the primary line power cable is configured to be electrically connected to a first of the electrical components of the electric vehicle;
an end line power cable (120) extending to a second cable end (114), the end line power cable having a second cable conductor (126), a second cable insulator (127) surrounding the second cable conductor, and a second cable shield (128) surrounding the second cable insulator, the second cable conductor being a stranded core conductor, the second cable conductor being flexible, wherein an opposite end of the end line power cable is configured to be electrically connected to a second of the electrical components of the electric vehicle; and
the inline power connector (200) of any preceding claim for connecting the primary line power cable and the end line power cable, the inline power connector including:
the conductor termination (210) for electrically connecting the first cable conductor of the primary line power cable and the second cable conductor of the end line power cable;
the power connector insulator (220) surrounding the conductor termination to isolate the conductor termination;
the power connector shield (250) surrounding the power connector insulator, the power connector shield including the first shield end (260) and the second shield end (262), the first shield end coupled to the first cable shield of the primary line power cable, the second shield end coupled to the second cable shield of the end line power cable; and
the power connector housing (152) having the housing cavity (282) that receives the power connector shield, the power connector insulator, and the conductor termination, the power connector housing holding the first seal (290) at a first housing end (286) configured to be sealed to the primary line power cable and the second seal (295) at the second housing end (288) configured to be sealed to the end line power cable.

13. The power cable harness (102) of claim 13, wherein the primary line power cable (110) has a smaller diameter than the end line power cable (120).

14. The power cable harness (102) of claim 13 or 14, wherein the primary line power cable (110) has a length at least three times a length of the end line power cable (120).

15. A power connector system (100) for a vehicle (10) comprising:
a first power connector (150) having a first power connector housing (152) holding a first power connector terminal, the first power connector terminal configured to be electrically connected to a first electrical component of the vehicle;
a second power connector (160) having a second power connector housing (162) holding a second power connector terminal, the second power connector terminal configured to be electrically connected to a second electrical component of the vehicle; and
the power cable harness (102) of claim 12, 13 or 14 electrically connecting the first and second power connectors, the power cable harness including:
the primary line power cable (110) extending to the first cable end (112), wherein the opposite end of the primary line power cable is terminated to the first power connector terminal of the first power connector;
the end line power cable (120) extending to a second cable end (114), wherein the opposite end of the end line power cable is terminated to the second power connector terminal of the second power connector; and
the inline power connector (200) for connecting the first cable end of the primary line power cable and the second cable end of the end line power cable.
